# EUROPÄISCHE PATENTSCHRIFT

(11) **EP 1 721 780 B1**
(45) Veröffentlichungstag und Bekanntmachung des Hinweises auf die Patenterteilung: **17.07.2013**
(21) Anmeldenummer: 06009581.7
(22) Anmeldetag: 09.05.2006
(51) Int. Cl.: B60P 1/28, B60P 1/273

(54) **Kippaufbau für ein Kipperfahrzeug**
Tipping bucket for a vehicle
Benne basculante pour un véhicule

(30) Priorität: 13.05.2005 DE 202005008750 U
(43) Veröffentlichungstag der Anmeldung: 15.11.2006
(73) Patentinhaber: Franz Xaver Meiller Fahrzeug- und Maschinenfabrik-GmbH & Co KG, 80997 München (DE)
(72) Erfinder: Rammelsberger, Michael, 85221 Dachau (DE); Kohut, Detlef, 82194 Gröbenzell (DE)
(74) Vertreter: Tiesmeyer, Johannes

(56) Entgegenhaltungen:
- DE-U1- 20 319 167
- DE-U1- 29 709 155
- GB-A- 713 103
- US-B1- 6 572 197

## Beschreibung

Die Erfindung betrifft einen Kippaufbau für ein Kipperfahrzeug, umfassend eine Basis,
einen um eine normalerweise horizontale Kippachse zwischen einer Fahrgrundstellung und einer Maximalkippstellung relativ zur Basis kippbaren Lastentransportbehälter mit einem Behälterboden und Behälterwänden, von denen eine um eine oberhalb der Kippachse verlaufende und zur Kippachse im Wesentlichen parallele Schwenkachse schwenkbeweglich hängend gelagert ist, so dass sie aus einer den Lastentransportbehälter an einer Seite verschließenden Schließstellung heraus in eine Öffnungsstellung verschwenkbar ist, wenn der Lastentransportbehälter aus seiner Fahrgrundstellung heraus in eine Kippstellung verkippt wird, und
eine Verriegelungseinrichtung zur Sicherung der schwenkbaren Behälterwand in deren Schließstellung, wobei die Verriegelungseinrichtung eine Riegelanordnung aufweist, die in der Fahrgrundstellung des Lastentransportbehälters eine Behälterbodenöffnung durchsetzt und die in Schließstellung befindliche schwenkbare Behälterwand an deren unterem Rand hintergreift.

Ein Kippaufbau der vorstehend genannten Art ist aus der DE 203 19 167 U1 bekannt. Er zeichnet sich durch eine sehr einfache, zuverlässige und preiswerte Einrichtung zur Verriegelung der schwenkbaren Behälterwand aus. In der DE 203 19 167 U1 ist als Lastentransportbehälter eine Halfpipe-Kippbrücke beschrieben, welche als schwenkbare Behälterwand eine Rückwandklappe aufweist. In der bestimmungsgemäßen Anordnung auf einem Kipperfahrzeug kann die Kippbrücke um eine heckseitige Kippachse gekippt werden, um Schüttgut heckseitig auszubringen. In der Fahrgrundstellung liegt die Kippbrücke in normalerweise horizontaler Ausrichtung auf der Basis, etwa einem Hilfsrahmen oder dgl. auf, wobei die heckseitige Ausschüttöffnung von der Rückwandklappe verschlossen ist. Zwei an der Basis befestigte Riegelelemente durchsetzen dabei zwei Löcher im Kippbrückenboden und stehen nach oben hin über den unteren Rand der Rückwandklappe hinaus ab, so dass die Rückwandklappe gegen Verschwenken in Öffnungsrichtung blockiert und gesichert ist. Wird die Kippbrücke ausgehend von der normalen Fahrstellung um die Kippachse verkippt, so kommt es zur Entfernung des Kippbrückenbodens von dem Riegelelement, so dass schließlich bei einem Kippwinkel von z.B. 9° - 10° der untere Rand der Rückwandklappe von den Riegelelementen freigegeben wird und die Rückwandklappe in Öffnungsstellung verschwenken kann. Bei Kippbrücken dieser Art ist es häufig vorgesehen, dass die Rückwandklappe um ihre obere Schwenkachse pendeln kann, d.h. sich normalerweise unter der Wirkung der Schwerkraft vertikal ausrichten kann. Im entriegelten Zustand der Rückwandklappe kann das Schüttgut die von der Rückwandklappe freigegebene Ausschüttöffnung verlassen. Es gibt auch Ausführungsvarianten der hier betrachteten Kippbrücken, bei denen die Rückwandklappe mittels motorischer, insbesondere hydraulischer Antriebsmittel zu öffnen ist.

Ein Nachteil der aus der DE 203 19 167 U1 bekannten Verriegelungseinrichtung für die Rückwandklappe hat sich darin gezeigt, dass durch die Kippbrückenbodenlöcher für den Durchtritt der Riegelelemente kleine Mengen an Schüttgut ausfließen und dabei darunterliegende Bereiche des Kipperfahrzeugs verschmutzen können.

Der Erfindung liegt die Aufgabe zugrunde, einen Kippaufbau der eingangs genannten Art bereitzustellen, bei dem eine einfach aufgebaute und preiswert realisierbare Verriegelungseinrichtung vorgesehen ist, die zuverlässig funktioniert und keinen nennenswerten Anlass zur Verschmutzung von darunterliegenden Bereichen des Kipperfahrzeugs im Betrieb gibt.

Zur Lösung dieser Aufgabe wird erfindungsgemäß vorgeschlagen, dass die Riegelanordnung ein an der Basis des Kippaufbaus angeordnetes erstes Riegelelement und ein an dem Lastentransportbehälter angeordnetes zweites Riegelelement aufweist, wobei das zweite Riegelelement zwischen einer Verriegelungsstellung, in der es über die Behälterbodenöffnung hinaus nach oben absteht und die schwenkbare Behälterwand in deren Schließstellung verriegelnd hintergreift, und einer Neutralstellung, in der es zur Behälterbodenöffnung hin zurückgezogen ist und den Öffnungsquerschnitt der Behälterbodenöffnung im Wesentlichen verschließt, schwenkbar ist, wobei das erste Riegelelement dazu eingerichtet ist, das zweite Riegelelement in die Verriegelungsstellung zu verdrängen, wenn der Lastentransportbehälter aus einer Kippstellung heraus in die Fahrgrundstellung bewegt wird, und wobei das zweite Riegelelement dazu eingerichtet ist, in die Neutralstellung überzugehen, wenn es beim Kippen des Lastentransportbehälters aus der Fahrgrundstellung heraus von dem ersten Riegelelement freikommt.

Die Erfindung basiert auf der Idee, einen Teil der Riegelanordnung, nämlich das zweite Riegelelement, an dem Lastentransportbehälter vorzusehen und so zu gestalten und zu lagern, dass es ähnlich einer Deckelklappe oder dgl. funktioniert, die den Öffnungsquerschnitt der Behälterbodenöffnung weitestgehend verschließt, so dass die Behälterbodenöffnung beim Kippen des Lastentransportbehälters weitgehend abgedichtet ist und somit keine Durchtrittsstelle für Schüttgut bilden kann.

Vorzugsweise handelt es sich bei dem Kipperaufbau nach der Erfindung um einen sogenannten Hinterkipperaufbau, wobei die schwenkbare Behälterwand eine den Behälter an dessen hinterem Ende verschließende Rückwand ist, wobei die Kippachse des Lastentransportbehälters im Heckbereich des Kippaufbaus verläuft.

Der Lastentransportbehälter kann z.B. eine Muldenkippbrücke, insbesondere eine Halfpipe-Muldenkippbrücke sein, wie sie z.B. auch schon in der DE 201 19 167 U1 erläutert ist. Die Erfindung soll aber nicht auf solche Muldenkippbrücken beschränkt sein.

Gemäß einer bevorzugten Ausführungsform der Erfindung umfasst die Verriegelungseinrichtung zwei seitlich nebeneinander angeordnete Riegelanordnungen im Wesentlichen gleicher Bauart, wobei die zugehörigen Behälterbodenöffnungen bei in Fahrgrundstellung befindlicher Kippbrücke vor und oberhalb der Kippachse liegt. Bei einer solchen geometrischen Anordnung kann auf einfache Weise gewährleistet werden, dass die an der Basis angeordneten ersten Riegelelemente die zugeordneten zweiten Riegelelemente effizient in die Verriegelungsstellung verdrängen können, um die schwenkbare Behälterwand nach deren Übergang in die Schließstellung verriegelnd zu hintergreifen. Vorzugsweise ist die Schwenkachse der schwenkbaren Behälterwand relativ zur Kippachse in Richtung weg von dem Ausschüttrand versetzt, d.h. beim Hinterkipperaufbau in Richtung nach vorn versetzt. Die schwenkbare Behälterwand kann mit Anschlagelementen zusammenwirken, welche dafür sorgen, dass die schwenkbare Behälterwand in ihrer Schließstellung bei in Fahrgrundstellung befindlichem Lastentransportbehälter schräg orientiert ist, so dass ihr von den Riegelanordnungen zu sichernder unterer Rand in der Draufsichtsprojektion zwischen der Kippachse des Lastentransportbehälters und der Schwenkachse der schwenkbaren Wand liegt. Eine solche Anordnung stellt sicher, dass die schwenkbare Behälterwand beim Zurückkippen des Lastentransportbehälters in die Fahrgrundstellung zuverlässig in die Schließstellung einschwenkt und dort definiert mittels der Verriegelungseinrichtung gesichert werden kann.

Die Riegelanordnung sollte derart ausgebildet sein, dass sie den Öffnungsquerschnitt der Behälterbodenöffnung ungeachtet der jeweiligen Kippstellung des Lastentransportbehälters im Wesentlichen überdeckt, so dass die jeweilige Behälterbodenöffnung in keiner Stellung des Lastentransportbehälters für das Ausfließen von Schüttgut nach unten hin offen ist. Dies kann insbesondere durch entsprechende Formgebung des zweiten Riegelelementes erreicht werden. Das zweite Riegelelement kann exzentrisch so gelagert sein, dass es unter der Wirkung der Schwerkraft selbsttätig in die Neutralstellung übergeht, nachdem es beim Kippen des Lastentransportbehälters vom ersten Riegelelement freigekommen ist.

Es soll nicht ausgeschlossen sein, dass zwischen dem ersten Riegelelement und dem zweiten Riegelelement ein weiteres Element angeordnet ist. Vorzugsweise ist die Anordnung aber so getroffen, dass das erste Riegelelement und das zweite Riegelelement beim Verriegeln der schwenkbaren Behälterwand unmittelbar miteinander in Berührung stehen. Es hat sich als zweckmäßig herausgestellt, die Berührungsflächen der Riegelelemente so zu formen, dass sie einander komplementäre Rundungen aufweisen, welche Steuerkurvenfunktionen bei der Ineingriffnahme des zweiten Riegelelementes durch das erste Riegelelement erfüllen und insbesondere ein verschleißarmes Zusammenwirken der beiden Riegelelemente gewährleisten.

Vorzugsweise bestehen die Riegelelemente aus einem Metall, insbesondere Stahl. In alternativen Varianten kann zumindest eines der Riegelelemente aus einem anderen Material, z.B. Kunststoff, Gummi oder dgl., oder aus einem Verbundmaterial bestehen.

Ferner können im Rahmen der Erfindung Federelemente mit den Riegelelementen zusammenwirken oder darin integriert sein, um die schwenkbare Behälterwand elastisch nachgiebig verriegeln zu können. Auf diese Weise können insbesondere Klappergeräusche der Verriegelungsanordnung und der schwenkbaren Behälterwand unterdrückt bzw. vermieden werden.

Das erste Riegelelement ist vorzugsweise ein an einem Rahmenteil, insbesondere Kipplagerrahmenteil des Kippaufbaus befestigter, nach oben hin abstehender Klotz mit einer oben abgerundeten Seite zur Eingriffnahme des zweiten Riegelelementes.

Vorzugsweise ist die Riegelanordnung so gestaltet, dass sie die schwenkbare Behälterwand beim Kippen des Lastentransportbehälters aus der Fahrgrundstellung heraus freigibt, nachdem ein Kippwinkel im Bereich von ca. 7° - 15°, insbesondere 9° - 10°, erreicht ist.

Bevorzugte Ausführungsformen der Erfindung werden nachstehend unter Bezugnahme auf die Figuren nähert erläutert.
- Fig. 1: zeigt eine perspektivische Ansicht des hinteren Bereichs einer Halfpipe-Kippbrücke in Fahrgrundstellung mit in ihrer Schließstellung gesicherter Rückwand.
- Fig. 2: zeigt einen in Fig. 1 mit II markierten Bereich in vergrößerter Darstellung.
- Fig. 3: zeigt eine Längsschnittdarstellung der Riegelanordnung im Zustand der Sicherung der geschlossenen Behälterwand der Kippbrücke aus Fig. 1 und Fig. 2, wobei die Schnittebene in Fig. 2 bei III angedeutet ist.
- Fig. 4: zeigt eine entsprechende Längsschnittdarstellung der Riegel-anordnung mit entriegelter Rückwand und in Neutralstellung befindlichem zweitem Riegelelement.
- Fig. 5 und Fig. 6: zeigen Längsschnittdarstellungen der Riegelanordnung in Zwischenstellungen zwischen den Stellungen gemäß Fig. 3 und Fig. 4.

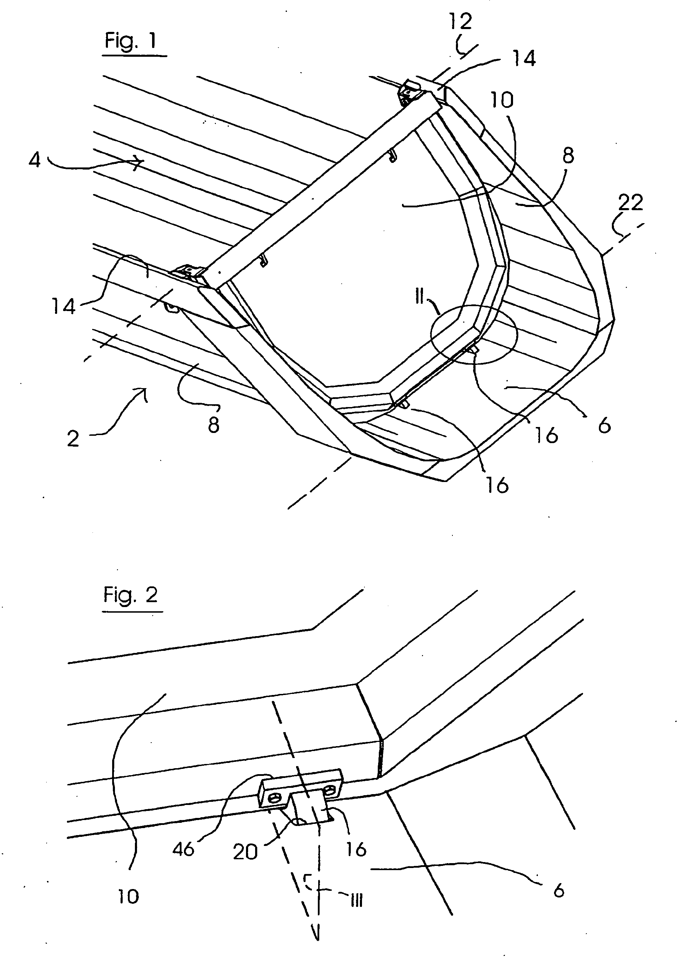

Fig. 1 zeigt den hinteren Bereich einer Halfpipe-Kippbrücke 2 mit einer Kippmulde 4, welche einen Behälterboden 6 und zwei davon nach oben abstehende Seitenwände 8 aufweist. Die Kippmulde 4 besteht vorzugsweise aus Metall, wobei z.B. das Bodenteil 6 aus Stahl gefertigt sein kann und die Seitenwandteile 8 aus Aluminium und/oder Stahl bestehen.

Die Halfpipe-Kippbrücke hat eine Rückwandklappe 10, die um eine Schwenkachse 12 schwenkbeweglich an oberen Randprofilelementen 14 der Seitenwände 8 hängend gelagert ist. In der in Fig. 1 gezeigten Fahrgrundstellung der Kippbrücke befindet sich die Rückwandklappe 10 in ihrer Schließstellung, in der sie die Kippbrücke 2 an ihrer Rückseite verschließt. Zwei Riegelelemente 16 hintergreifen die Rückwandklappe 10 an deren unterem Ende, so dass die Rückwandklappe 10 gegen unbeabsichtigtes Öffnen in der Fahrgrundstellung gesichert ist.

Die Riegelelemente 16 durchsetzen eine jeweilige Öffnung 20 in dem mittleren, näherungsweise ebenen Bereich des Behälterbodens 6. Wird die Kippbrücke 2 um die bei 22 in Fig. 1 angedeutete Kippachse aus der Fahrgrundstellung heraus in eine Kippstellung gekippt, so kommt die Rückwandklappe 10 aus der Verriegelung durch die Verriegelungselemente 16 frei, so dass sie um ihre Schwenkachse 12 in eine Öffnungsstellung verschwenkbar ist, um die Kippbrücke 2 an deren Rückseite zu öffnen. In einer bevorzugten einfachen Ausführungsform der Erfindung ist die Rückwandklappe 10 "pendelnd" aufgehängt. Sie wird daher dazu tendieren, sich während des Kippvorgangs der Kippbrücke 2 in eine vertikale Stellung unter der Wirkung der Schwerkraft auszurichten, wobei es üblicherweise zu Pendelbewegungen der Rückwandklappe 10 kommt. Während des Auskippens von Ladegut aus der Kippbrücke 2 kann es vorkommen, dass das Ladegut die Rückwandklappe 10 von der Innenseite her beaufschlagt und in Öffnungsstellung über die Vertikalposition hinaus aufdrückt.

In alternativen Ausführungsformen kann es vorgesehen sein, dass die Rückwandklappe 10 nach Entriegelung mittels hydraulischer Zylinder oder sonstiger Antriebsmittel zwangsweise in eine Öffnungsposition überführbar ist.

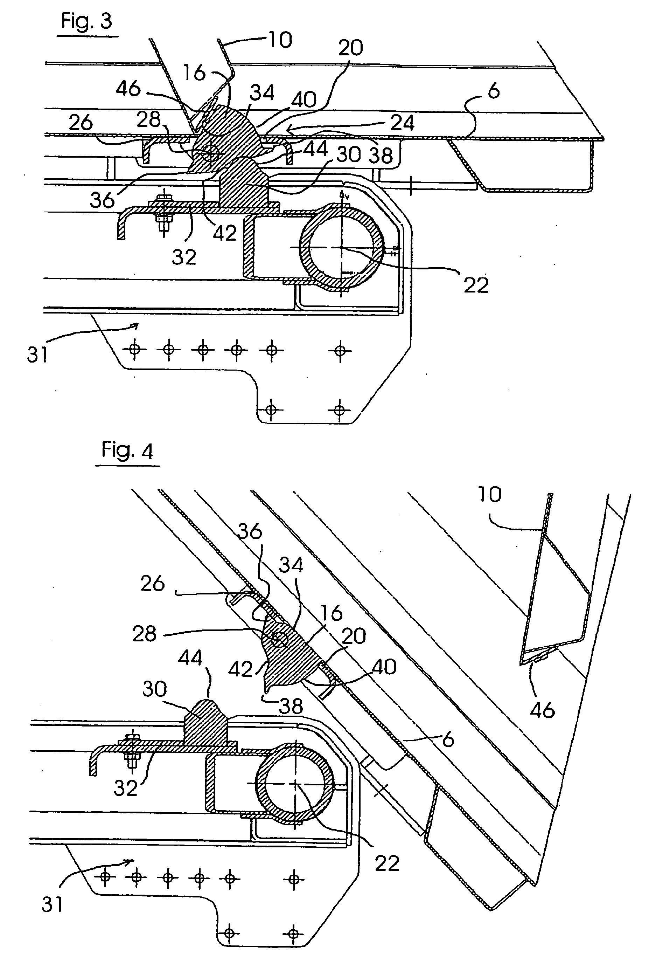

Zur Erläuterung der Verriegelungseinrichtung 24, zu welcher die Riegelelemente 16 gehören, wird im Folgenden auf die Figuren 3 - 6 Bezug genommen.

In der Schnittdarstellung gemäß Fig. 3 ist ein nachfolgend als zweites Riegelelement bezeichnetes Riegelelement 16 in der Verriegelungsstellung gemäß Fig. 1 bzw. Fig. 2 erkennbar. Das zweite Riegelelement 16 ist mittels einer Halterungsanordnung 26 an der Unterseite des Kippbrückenbodens 6 schwenkbeweglich gelagert, wobei die Schwenkachse mit 28 gekennzeichnet ist.

In der Verriegelungsstellung gemäß Fig. 1 - 3 ist das zweite Riegelelement 16 an einem ersten Riegelelement 30 abgestützt und zwangsweise in der Verriegelungsstellung fixiert.

Das erste Riegelelement 30 befindet sich an einer Halterungsanordnung 32, die am Rahmen 31, d.h. der Basis des Kippaufbaus fixiert ist.

Es ist in den Fig. 3 - 6 gut zu erkennen, dass in dem betrachteten Ausführungsbeispiel das erste Riegelelement 30 relativ zur Kippachse 22 nach vorn - und nach oben versetzt ist.

Fig. 4 zeigt die Kippbrücke 2 in einer Kippstellung mit großem Kippwinkel. Das zweite Riegelelement 16 ist von dem ersten Riegelelement 30 freigekommen und hat sich unter der Wirkung der Schwerkraft um seine Schwenkachse 28 verdreht, so dass die in Fig. 3 noch den unteren Rand der Rückwandklappe 10 nach oben überragende und die Rückwandklappe 10 verriegelnd beaufschlagende Anschlagfläche 34 nunmehr in Fig. 4 näherungsweise in einer Ebene mit dem mittleren Teil des Kippbrückenbodens 6 liegt. Das zweite Riegelelement ist exzentrisch gelagert, so dass es stets dazu tendiert, in die Stellung gemäß Fig. 4 um die Schwenkachse 28 herumzuklappen, sobald es vom ersten Riegelelement 30 freikommt. Das zweite Riegelelement kann dabei in die Behälterbodenöffnung 20 eintauchen. Eine Anschlagnase 36 des zweiten Riegelelementes 16 kommt dabei in eine Anschlagstellung an der Halterung 26 an der Unterseite des Behälterbodens 6.

Die Fläche 34 des zweiten Riegelelementes ist so bemessen, dass sie in der Stellung gemäß Fig. 4 die Behälterbodenöffnung 20 im Wesentlichen vollständig verschließt, so dass in der Kippbrücke 2 befindliches Schüttgut nicht durch die Behälterbodenöffnung 20 in nennenswertem Maße nach unten hin ausfließen kann. Aufgrund der exzentrischen Lagerung des zweiten Riegelelementes ist außerdem sichergestellt, dass auf der Fläche 34 des zweiten Riegelelementes aufliegendes Material das zweite Riegelelement 16 zum Verbleib in der Stellung gemäß Fig. 4 drückt, solange es vom ersten Riegelelement 30 frei ist.

Das zweite Riegelelement 16 hat abgesehen von den Anschlagnasen 36, 38 im Wesentlichen die Form eines Kreisscheibensegments mit dem Kreisbogenabschnitt 40 und dem Kreiszentrum im Bereich der Schwenkachse 28. Aufgrund einer solchen Geometrie und Lagerung des zweiten Riegelelementes 16 wird erreicht, dass das zweite Riegelelement 16 die Behälterbodenöffnung 20 in all seinen Schwenkstellungen gut verschließt.

In Fig. 4 ist zu erkennen, dass sich die Rückwandklappe 10 in eine näherungsweise vertikale Position eingependelt hat.

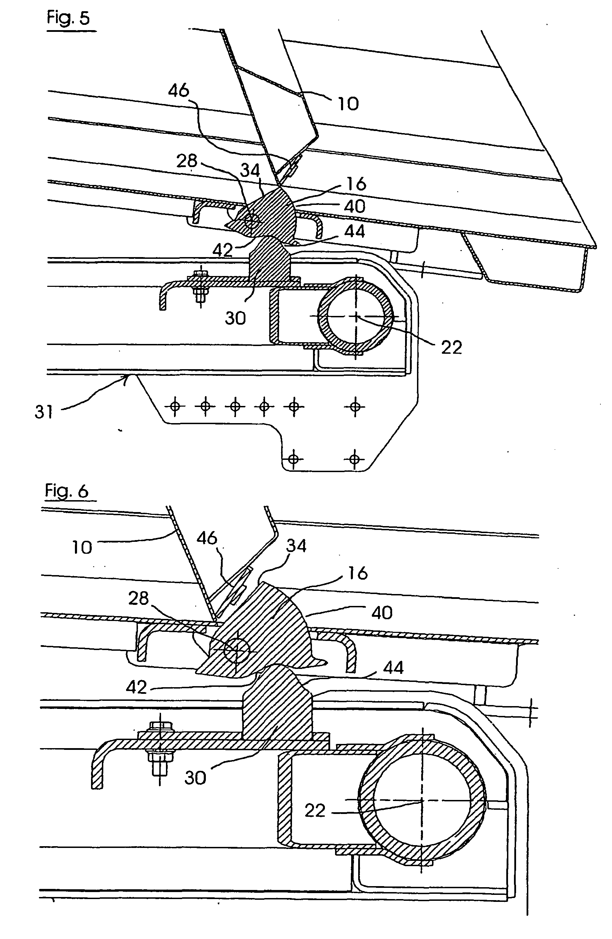

Fig. 5 zeigt die Situation, dass die Kippbrücke 2 während eines Kippvorgangs den Kippwinkel erreicht hat, bei dem die Rückwandklappe 10 aus der Verriegelung der Riegelanordnung 16, 30 freikommt. Zwar stützt sich das zweite Riegelelement 16 immer noch am ersten Riegelelement 30 ab; es hat sich jedoch schon um einen bestimmten Schwenkwinkelbetrag um die Achse 28 herum so weit verdrehen können, dass es kein Hindernis mehr für die Rückwandklappe 10 für deren Öffnungsbewegung darstellt. Im Verlauf des weiteren Kippvorgangs der Kippbrücke 2 kommen die Riegelelemente 16 und 30 voneinander frei, so dass sich schließlich ein Zustand gemäß Fig. 4 einstellt.

In Fig. 6 ist die Kippbrücke 2 wieder in Richtung zur Fahrgrundstellung zurückgekippt, ohne diese jedoch schon erreicht zu haben, wobei das zweite Riegelelement 16 mit seiner Rundkontur 42 wieder mit der ebenfalls abgerundeten Oberseite 44 des ersten Riegelelementes 30 in Berührung gekommen ist.

Die Berührungsflächen 42, 44 sind in komplementärer Weise so geformt, dass sie beim Vorgang der Verdrängung des zweiten Riegelelementes 16 in die Verriegelungsstellung zumindest teilweise eine Abwälzung der Elemente 16, 30 aneinander erlauben, wodurch letztere sehr gut vor Verschleiß geschützt sind.

Die Elemente 16, 30 bestehen vorzugsweise aus Metall, z.B. Stahl.

Als Gegenanschlag für das zweite Riegelelement 16 kann die Rückwandklappe 10 Scheibenelemente 46 umfassen, die insbesondere in Fig. 2 gut erkennbar sind. Diese vorzugsweise angeschraubten Scheibenelemente 46 können Ausgleichsscheiben umfassen, um eine spielfreie Verriegelung an der Rückwandklappe 10 durch die Riegelelemente 16 in der Fahrgrundstellung zu gewährleisten. Zu einem solchen Zweck können auch elastische Komponenten in oder an den Elementen 16, 30 oder/und 46 vorgesehen sein.

## Patentansprüche

1. Kippaufbau für ein Kipperfahrzeug, umfassend
- eine Basis (31),
- einen um eine, bei horizontal stehendem Fahrzeug horizontale Kippachse (22) zwischen einer Fahrgrundstellung und einer Maximalkippstellung relativ zur Basis (31) kippbaren Lastentransportbehälter (2) mit einem Behälterboden (6) und Behälterwänden (8, 10), von denen eine um eine oberhalb der Kippachse (22) verlaufende und zur Kippachse im Wesentlichen parallele Schwenkachse (12) schwenkbeweglich hängend gelagert ist, so dass sie aus einer den Lastentransportbehälter (2) an einer Seite verschließenden Schließstellung heraus in eine Öffnungsstellung verschwenkbar ist, wenn der Lastentransportbehälter (2) aus seiner Fahrgrundstellung heraus in eine Kippstellung verkippt wird, und
- eine Verriegelungseinrichtung (16, 30) zur Sicherung der schwenkbaren Behälterwand (10) in deren Schließstellung, wobei die Verriegelungseinrichtung (16, 30) eine Riegelanordnung (16, 30) aufweist, die in der Fahrgrundstellung des Lastentransportbehälters (2) eine Behälterbodenöffnung (20) durchsetzt und die in Schließstellung befindliche schwenkbare Behälterwand (10) an deren unterem Rand hintergreift, **dadurch gekennzeichnet, dass**
- die Riegelanordnung (16, 30) ein an der Basis (31) des Kippaufbaus angeordnetes erstes Riegelelement (30) und ein an dem Lastentransportbehälter (2) angeordnetes zweites Riegelelement (16) aufweist, wobei das zweite Riegelelement (16) zwischen einer Verriegelungsstellung, in der es über die Behälterbodenöffnung (20) hinaus nach oben absteht und die schwenkbare Behälterwand (10) in deren Schließstellung verriegelnd hintergreifen kann, und einer Neutralstellung, in der es zur Behälterbodenöffnung (20) hin zurückgezogen ist und den Öffnungsquerschnitt der Behälterbodenöffnung (20) im Wesentlichen verschließt, schwenkbar ist, wobei das erste Riegelelement (30) dazu eingerichtet ist, das zweite Riegelelement (16) in die Verriegelungsstellung zu verdrängen, wenn der Lastentransportbehälter (2) aus einer Kippstellung heraus in die Fahrgrundstellung bewegt wird, und wobei das zweite Riegelelement (16) dazu eingerichtet ist, in die Neutralstellung überzugehen, wenn es beim Kippen des Lastentransportbehälters (2) aus der Fahrgrundstellung heraus von dem ersten Riegelelement (30) freikommt.

2. Kippaufbau nach Anspruch 1, wobei die schwenkbare Behälterwand (10) eine den Behälter an dessen hinterem Ende verschließende Rückwand ist, wobei die Kippachse (22) des Lastentransportbehälters im Heckbereich des Kippaufbaus verläuft.

3. Kippaufbau nach Anspruch 2, wobei die Behälterbodenöffnung (20) bei in Fahrgrundstellung befindlichem Lastentransportbehälter (2) vor und oberhalb der Kippachse (22) liegt.

4. Kippaufbau nach einem der vorhergehenden Ansprüche, wobei die Riegelanordnung derart ausgebildet ist, dass sie den Öffnungsquerschnitt der Behälterbodenöffnung (20) ungeachtet der jeweiligen Kippstellung des Lastentransportbehälters (2) im Wesentlichen überdeckt.

5. Kippaufbau nach einem der vorhergehenden Ansprüche, wobei das zweite Riegelelement (16) so an dem Lastentransportbehälter (2) angelenkt ist, dass es unter der Wirkung der Schwerkraft selbsttätig in die Neutralstellung übergeht, nachdem es beim Kippen des Lastentransportbehälters (2) vom ersten Riegelelement (30) freigekommen ist.

6. Kippaufbau nach einem der vorhergehenden Ansprüche, wobei das erste Riegelelement (30) und das zweite Riegelelement (16) beim Verriegeln der schwenkbaren Behälterwand (10) unmittelbar miteinander in Berührung kommen.

7. Kippaufbau nach Anspruch 6, wobei die Berührungsflächen (42, 44) der Riegelelemente (16, 30) einander komplementäre Rundungen aufweisen.

## Claims

1. A tipping structure for a tipper vehicle, comprising
- a base (31)
- a load transport container (2) which can be tipped about a tipping axis (22), which is horizontal when the vehicle is horizontal, between a basic travelling position and a maximally tipped position relative to the base (31) and which comprises a container bottom (6) and container walls (8, 10), one of which is mounted suspended swivellably about a swivel axis (12) extending above the tipping axis (22) and substantially parallel to said tipping axis, such that it is swivellable out of a closed position closing the load transport container (2) on one side into an open position when the load transport container (2) is tipped out of its basic travelling position into a tipped position, and
- a locking means (16, 30) for securing the swivellable container wall (10) in its closed position, the locking means (16, 30) comprising a bolt arrangement (16, 30) which, in the basic travelling position of the load transport container (2), passes through an opening (20) in the container bottom and engages behind the swivellable container wall (10) located in the closed position at the lower edge thereof, **characterised in that**
- the bolt arrangement (16, 30) comprises a first bolt element (30) arranged on the base (31) of the tipping structure and a second bolt element (16) arranged on the load transport container (2), the second bolt element (16) being swivellable between a locking position, in which it projects upwards beyond the opening (20) in the container bottom and may engage lockingly behind the swivellable container wall (10) in the closed position thereof, and a neutral position, in which it is withdrawn towards the opening (20) in the container bottom and substantially closes the opening cross-section of the opening (20) in the container bottom, the first bolt element (30) being designed to displace the second bolt element (16) into the locking position when the load transport container (2) is moved out of a tipped position into the basic travelling position, and the second bolt element (16) being designed to pass into the neutral position when it is released by the first bolt element (30) on tipping of the load transport container (2) out of the basic travelling position.

2. A tipping structure according to claim 1, wherein the swivellable container wall (10) is a rear wall closing the container at the rear end thereof, wherein the tipping axis (22) of the load transport container extends in the tail region of the tipping structure.

3. A tipping structure according to claim 2, wherein the opening (20) in the container bottom is in front of and above the tipping axis (22) when the load transport container (2) is in the basic travelling position.

4. A tipping structure according to any one of the preceding claims, wherein the locking arrangement is configured such that it substantially covers the opening cross-section of the opening (20) in the container bottom, irrespective of the particular tipped position of the load transport container (2).

5. A tipping structure according to any one of the preceding claims, wherein the second bolt element (16) is coupled to the load transport container (2) in such a way that it moves automatically into the neutral position under the action of gravity, once it has been released by the first bolt element (30) on tipping of the load transport container (2).

6. A tipping structure according to any one of the preceding claims, wherein the first bolt element (30) and the second bolt element (16) come directly into contact with one another on locking of the swivellable container wall (10).

7. A tipping structure according to claim 6, wherein the contact faces (42, 44) of the bolt elements (16, 30) exhibit mutually complementary rounding.

## Revendications

1. Benne basculante pour un véhicule, comprenant:
- une base (31),
- un bac de transport de charge (2) capable de basculer par rapport à la base (31), alors que le véhicule est en position horizontale, autour d'un axe de basculement horizontal (22) entre une position basse de roulage et une position de basculement maximum, avec un fond de bac (6) et des parois de bac (8, 10), dont l'une est suspendue en mouvement pivotant autour d'un axe de pivotement (12) s'étendant au-dessus de l'axe de basculement (22) et essentiellement parallèle à l'axe de basculement, de telle manière qu'elle puisse pivoter d'une position de fermeture fermant sur un côté le bac de transport de charge (2) à une position d'ouverture, lorsque le bac de transport de charge (2) est basculé de sa position basse de roulage à une position basculée, et
- un système de verrouillage (16, 30) destiné à fixer la paroi de bac pivotante (10) dans sa position de fermeture, dans laquelle le système de verrouillage (16, 30) présente un dispositif de verrou (16, 30) qui, dans la position basse de roulage du bac de transport (2), traverse une ouverture du fond de bac (20) et qui accroche par l'arrière, à son bord inférieur, la paroi de bac pivotante (10) se trouvant en position de fermeture,
**caractérisé en ce que**
- le dispositif de verrou (16, 30) présente un premier élément de verrou (30) disposé sur la base (31) de la benne basculante et un deuxième élément de verrou (16) disposé sur le bac de transport de charge (2), dans lequel le deuxième élément de verrou (16) peut pivoter entre une position de verrouillage, dans laquelle il est saillant vers le haut au-delà de l'ouverture du fond de bac (20) et peut accrocher par l'arrière la paroi de bac pivotante (10) en la verrouillant dans sa position de fermeture, et une position neutre, dans laquelle il est retiré en direction de l'ouverture du fond de bac (20) et ferme essentiellement la section transversale d'ouverture de l'ouverture du fond de bac (20), dans lequel le premier élément de verrou (30) est conçu de façon à repousser le deuxième élément de verrou (16) dans la position de fermeture lorsque le bac de transport de charge (2) est déplacé d'une position basculée à la position basse de roulage, et dans lequel le deuxième élément de verrou (16) est conçu de façon à passer dans la position neutre, lorsqu'il se libère du premier élément de verrou (30) lors du basculement du bac de transport de charge (2) à partir de la position basse de roulage.

2. Benne basculante selon la revendication 1, dans laquelle la paroi de bac pivotante (10) est une paroi arrière fermant le bac à son extrémité arrière, dans laquelle l'axe de basculement (22) du bac de transport de charge (2) s'étend dans la région arrière de la benne basculante.

3. Benne basculante selon la revendication 2, dans laquelle l'ouverture du fond de bac (20) est située en avant et au-dessus de l'axe de basculement (22) lorsque le bac de transport de charge (2) se trouve dans la position basse de roulage.

4. Benne basculante selon l'une quelconque des revendications précédentes, dans laquelle le dispositif de verrou est réalisé de telle manière qu'il recouvre essentiellement la section transversale d'ouverture de l'ouverture du fond de bac (20) quelle que soit la position basculée respective du bac de transport de charge (2).

5. Benne basculante selon l'une quelconque des revendications précédentes, dans laquelle le deuxième élément de verrou (16) est articulé sur le bac de transport de charge (2), de telle manière qu'il passe automatiquement dans la position neutre sous l'action de la gravité, après qu'il ait été libéré du premier élément de verrou (30) lors du basculement du bac de transport de charge (2).

6. Benne basculante selon l'une quelconque des revendications précédentes, dans laquelle le premier élément de verrou (30) et le deuxième élément de verrou (16) viennent directement en contact l'un avec l'autre lors du verrouillage de la paroi de bac pivotante (10).

7. Benne basculante selon la revendication 6, dans laquelle les faces de contact (42, 44) des éléments de verrou (16, 30) présentent des arrondis complémentaires l'un à l'autre.
